# EUROPÄISCHE PATENTSCHRIFT

(11) **EP 2 958 697 B1**
(45) Veröffentlichungstag und Bekanntmachung des Hinweises auf die Patenterteilung: **06.02.2019**
(21) Anmeldenummer: 14705332.6
(22) Anmeldetag: 18.02.2014
(51) Int. Cl.: B23D 59/00, B23Q 17/22, B28D 1/04

(54) **VORRICHTUNG ZUM TRENNEN EINES WERKSTÜCKES ENTLANG EINER TRENNLINIE**
DEVICE FOR CUTTING A WORKPIECE ALONG A CUT LINE
APPAREIL POUR COUPER UNE PIÉCE LE LONG D'UNE LIGNE DE COUPE

(30) Priorität: 20.02.2013 DE 102013202754
(43) Veröffentlichungstag der Anmeldung: 30.12.2015
(73) Patentinhaber: Hilti Aktiengesellschaft, 9494 Schaan (LI)
(72) Erfinder: BRUGGER, Peter, A-6800 Feldkirch (AT)
(74) Vertreter: Hilti Aktiengesellschaft Corporate Intellectual Property
(86) Internationale Anmeldenummer: PCT/EP2014/053063
(87) Internationale Veröffentlichungsnummer: WO 2014/128095

(56) Entgegenhaltungen:
- EP-A1- 1 693 173
- DE-B3-102006 011 131
- JP-A- 2005 111 855
- US-A- 6 152 803
- US-A1- 2003 060 022
- US-A1- 2006 243 350
- US-A1- 2011 015 772
- US-A1- 2011 056 084
- US-A1- 2011 056 716
- US-A1- 2011 203 565
- US-B2- 7 170 076

## Beschreibung

### Technisches Gebiet

Die vorliegende Erfindung betrifft eine Vorrichtung zum Trennen eines Werkstückes entlang einer Trennlinie gemäß dem Oberbegriff des Anspruchs 1. Eine derartige Vorrichtung ist aus dem Dokument EP 1 693 173 A bekannt.

### Stand der Technik

Bekannte als Wandsäge ausgebildete Vorrichtungen zum Trennen eines Werkstückes entlang einer Trennlinie bestehen aus einer Führungsschiene, einem an der Führungsschiene verschiebbar angeordneten Sägekopf und einer motorischen Vorschubeinrichtung zum Verschieben des Sägekopfes entlang der Führungsschiene. Der Sägekopf umfasst ein Sägeblatt, das an einem Sägearm befestigt ist und von einem Antriebsmotor um eine Drehachse angetrieben wird. Der Sägearm ist von einem Schwenkmotor um eine Schwenkachse schwenkbar ausgebildet. Der Antriebsmotor und der Schwenkmotor sind in einem Gerätegehäuse des Sägekopfes angeordnet. Die motorische Vorschubeinrichtung umfasst einen Führungsschlitten und einen Vorschubmotor, der im Gerätegehäuse des Sägekopfes angeordnet ist. Der Sägekopf ist auf dem Führungsschlitten angebracht und über den Vorschubmotor entlang der Führungsschiene in einer Vorschubrichtung verschiebbar ausgebildet. Im Gerätegehäuse ist neben den Motoren eine Kontrolleinrichtung zur Steuerung der Wandsäge vorgesehen.

Wandsägen werden in einem manuellen Verfahren oder in einem zumindest stückweise automatisierten Verfahren betrieben. Bei manuellen Verfahren zum Trennen eines Werkstückes entlang einer Trennlinie muss der Bediener die Endpunkte der Trennlinie während der Bearbeitung durch eine manuelle Steuerung der motorischen Vorschubeinrichtung anfahren. Wenn das Sägeblatt von einem Sägeblattschutz umgeben ist, sind die Austrittspunkte des Sägeblattes im Werkstück für den Bediener schlecht oder überhaupt nicht sichtbar, so dass der Bediener die Endpunkte einer Trennlinie während des Bearbeitungsprozesses nicht bestimmen kann. Der Bediener erhält nur wenige Informationen über das aktuelle Bearbeitungsergebnis. Die aktuelle Schnitttiefe des Sägeblattes im Werkstück kann beispielsweise an einer Skala auf dem Sägeblattschutz abgelesen werden. Nachteilig ist, dass die aktuelle Schnitttiefe bei Schnitten ohne Sägeblattschutz nicht angezeigt wird. Der Sägeblattschutz wird, wie der gesamte Sägekopf, während des Bearbeitungsprozesses häufig stark verschmutzt, so dass die Lesbarkeit der Skala eingeschränkt sein kann. Außerdem muss der Bediener während des Bearbeitungsprozesses einen Sicherheitsabstand zur Wandsäge einhalten, wodurch die Lesbarkeit der Skala zusätzlich eingeschränkt werden kann, vor allem bei waagerechten Schnitten.

Aus EP 1 693 173 A1 sind ein zumindest stückweise automatisiertes Verfahren zum Trennen eines Werkstückes entlang einer Trennlinie sowie eine zur Ausführung des Verfahrens geeignete Wandsäge bekannt. Die Wandsäge weist neben den üblichen Komponenten eine Sensoreinrichtung mit einem Schwenkwinkelsensor und einem Wegsensor auf, wobei der Schwenkwinkelsensor den Schwenkwinkel des Sägearms und der Wegsensor die Position des Sägekopfes auf der Führungsschiene überwacht. Das bekannte Verfahren zum Trennen eines Werkstückes weist eine Folge von drei Verfahrensschritten auf, die nacheinander ausgeführt werden. Im ersten Verfahrensschritt wird der Sägearm um einen Schwenkwinkel geneigt, der der Schnitttiefe des Teilschnittes entspricht. Im zweiten Verfahrensschritt wird der Sägekopf längs der Führungsschiene entlang der Vorschubrichtung in einer Hinrichtung bis zum ersten Endpunkt der Trennlinie verschoben. Im dritten Verfahrensschnitt wird der Sägekopf längs der Führungsschiene in einer Rückrichtung entlang der Vorschubrichtung bis zum zweiten Endpunkt der Trennlinie verschoben. Der Trennschnitt wird in mehreren Teilschnitten erstellt. Die drei Verfahrensschritte werden solange wiederholt, bis die gewünschte Schnitttiefe des Trennschnittes erreicht ist. Der Bediener soll durch das automatisierte Verfahren zum Trennen von Routinetätigkeiten entlastet werden und sich auf die Überwachung des Bearbeitungsprozesses konzentrieren können. Offen bleibt, wie die Überwachung des Bearbeitungsprozesses durch den Bediener erfolgt.

### Darstellung der Erfindung

Die Aufgabe der vorliegenden Erfindung besteht in der Entwicklung einer Vorrichtung zum Trennen eines Werkstückes, die die Überwachung des Bearbeitungsprozesses für den Bediener vereinfacht.

Diese Aufgabe wird bei der eingangs genannten Vorrichtung zum Trennen eines Werkstückes erfindungsgemäß durch die Merkmale des Anspruchs 1 gelöst. Vorteilhafte Weiterbildungen sind in den abhängigen Ansprüchen angegeben.

Erfindungsgemäß ist vorgesehen, dass die Kontrolleinrichtung auf Grundlage der, von der Sensoreinrichtung erfassten, Messgrößen ein aktuelles Bearbeitungsergebnis des Bearbeitungsprozesses berechnet und das aktuelle Bearbeitungsergebnis auf der Anzeigeeinrichtung dargestellt. Die Darstellung des aktuellen Bearbeitungsergebnisses auf der Anzeigeeinrichtung kann als Zahlenwert und/oder in grafischer Form erfolgen. Der Bediener kann den Bearbeitungsprozess mit Hilfe des berechneten, aktuellen Bearbeitungsergebnisses überwachen. Bei einem manuellen Verfahren sind vor allem die aktuelle Schnitttiefe des Sägeblattes und die Position der Endpunkte geeignete Größen zur Überwachung des Bearbeitungsprozesses. Sämtliche Informationen über das Bearbeitungsergebnis, die aus den Messgrößen der Sensoreinrichtung und weiteren bekannten Geräteparametern berechnet werden können, können auf der Anzeigeeinrichtung angezeigt werden.

Bevorzugt weist die Kontrolleinrichtung ein Speicherelement auf und speichert die, von der Sensoreinrichtung erfassten, Messgrößen und das aktuelle Bearbeitungsergebnis im Speicherelement. Wenn die Messgrößen der Sensoreinrichtung und das berechnete aktuelle Bearbeitungsergebnis im Speicherelement gespeichert werden, kann die Kontrolleinrichtung weitere Kenngrößen zur Überwachung des Bearbeitungsprozesses berechnen oder die zeitliche Entwicklung des Bearbeitungsprozesses grafisch darstellen.

Besonders bevorzugt berechnet die Kontrolleinrichtung aus den im Speicherelement gespeicherten Messgrößen und den aktuellen Bearbeitungsergebnissen weitere Kenngrößen für den Bearbeitungsprozess und stellt die weiteren Kenngrößen auf der Anzeigeeinrichtung dar. Die Darstellung der weiteren Kenngrößen für den Bearbeitungsprozess auf der Anzeigeeinrichtung kann als Zahlenwert und/oder in grafischer Form erfolgen. Neben der aktuellen Schnitttiefe des Sägeblattes im Werkstück ist beispielsweise der Verlauf des Trennschnittes im Werkstück für den Bediener interessant. Zu den weiteren Kenngrößen für den Bearbeitungsprozess gehören die Hauptschnitttiefen, die Positionen der Endpunkte des Trennschnittes und die Länge des Trennschnittes.

In einer bevorzugten Ausführung ist eine Fernsteuerungseinrichtung vorgesehen, die die Bedienungseinrichtung und die Anzeigeeinrichtung umfasst und über eine Kommunikationsverbindung mit der Kontrolleinrichtung verbunden ist. Die Darstellung des aktuellen Bearbeitungsergebnisses auf der Fernsteuerungseinrichtung hat den Vorteil, dass der Bediener den Bearbeitungsprozess mit Hilfe der berechneten, aktuellen Bearbeitungsergebnisse und weiterer Kenngrößen überwachen kann. Der Bediener hat die Fernsteuerungseinrichtung während des Bearbeitungsprozesses in der Hand und erhält über die Anzeigeeinrichtung sämtliche Informationen für die Überwachung des Bearbeitungsprozesses.

Besonders bevorzugt weist die Kontrolleinrichtung eine erste und zweite Kontrolleinrichtung auf, wobei die erste Kontrolleinrichtung im Sägekopf und die zweite Kontrolleinrichtung in der Fernsteuerungseinrichtung angeordnet sind. Der Bediener stellt über die Bedienungseinrichtung der Fernsteuerungseinrichtung die gewünschten Geräte- und Bearbeitungsparameter ein. Die zweite Kontrolleinrichtung wandelt die Geräte- und Bearbeitungsparameter in entsprechende Steuerbefehle für den Sägekopf und die motorische Vorschubeinrichtung um. Die Steuerbefehle werden über die Kommunikationsverbindung von der zweiten Kontrolleinrichtung an die erste Kontrolleinrichtung übermittelt. Die erste Kontrolleinrichtung erteilt die Steuerbefehle an den Sägekopf und die motorische Vorschubeinrichtung.

In einer bevorzugten Variante erfolgt die Berechnung des aktuellen Bearbeitungsergebnisses in der ersten Kontrolleinrichtung, die im Sägekopf angeordnet ist. Die Berechnung und Anzeige des aktuellen Bearbeitungsergebnisses soll in Echtzeit erfolgen, so dass der Bediener den Bearbeitungsprozess anhand des aktuellen Bearbeitungsergebnisses überwachen kann und, falls erforderlich, in den Bearbeitungsprozess eingreifen kann. Je kürzer die Übertragungswege der Messdaten sind, umso kürzer ist die Zeitverzögerung. Die Berechnung des aktuellen Bearbeitungsergebnisses in der ersten Kontrolleinrichtung hat den Vorteil, dass nur die Bearbeitungsergebnisse, die auf der Anzeigeeinrichtung dargestellt werden sollen, über die Kommunikationsverbindung zur Fernsteuerungseinrichtung übertragen werden.

In einer alternativen bevorzugten Variante übermittelt die erste Kontrolleinrichtung die, von der Sensoreinrichtung erfassten, Messgrößen an die zweite Kontrolleinrichtung und die Berechnung des aktuellen Bearbeitungsergebnisses erfolgt in der zweiten Kontrolleinrichtung. Die Übertragung der Messgrößen über die Kommunikationsverbindung an die zweite Kontrolleinrichtung, die in der Fernsteuerungseinrichtung angeordnet ist, bietet sich an, wenn die Applikation eine spezielle Fernsteuerungseinrichtung erfordert und nicht mit jeder Fernsteuerungseinrichtung ausgeführt werden kann.

### Ausführungsbeispiele

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, der Zeichnung sowie den Ansprüchen offenbarten Merkmale der Erfindung können sowohl einzeln für sich als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei gegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Es zeigen:
- FIG. 1: ein schienengeführtes Gerätesystem zum Trennen eines Werkstückes bestehend aus einer Führungsschiene, einem an der Führungsschiene verschiebbar angeordneten Sägekopf und einer motorischen Vorschubeinrichtung zum Verschieben des Sägekopfes entlang der Führungsschiene;
- FIG. 2: das Zusammenspiel zwischen einer im Sägekopf angeordneten ersten Kontrolleinrichtung und einer Fernsteuerungseinrichtung des in FIG. 1 gezeigten Gerätesystems in Form eines Blockdiagramms; und
- FIG. 3: ein Werkstück, in dem mit Hilfe des Gerätesystems der FIG. 1 in drei Teilschnitten ein Trennschnitt erzeugt wird.

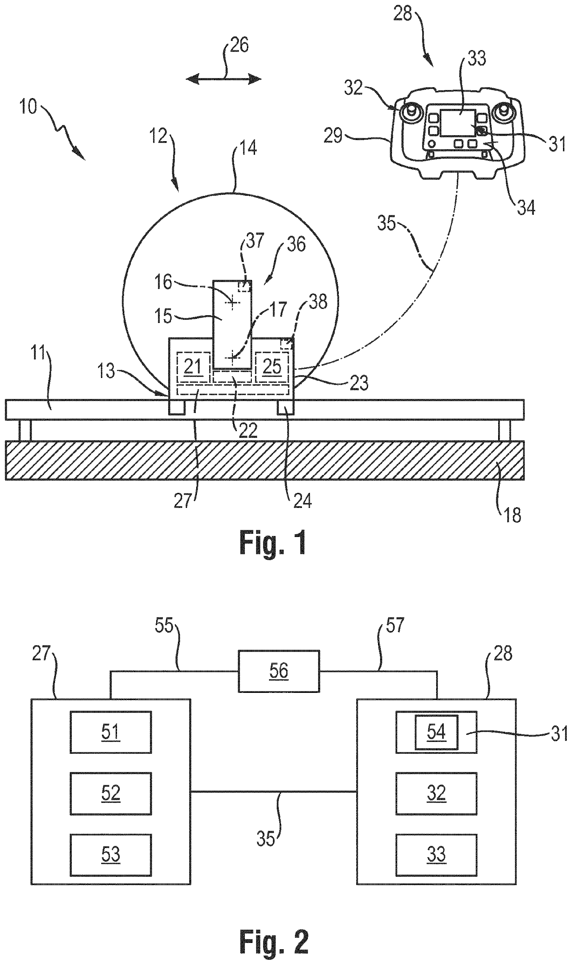

FIG. 1 zeigt ein schienengeführtes Gerätesystem 10 bestehend aus einer Führungsschiene 11, einem an der Führungsschiene 11 verschiebbar angeordneten Werkzeuggerät 12 und einer motorischen Vorschubeinrichtung 13 zum Verschieben des Werkzeuggerätes 12 entlang der Führungsschiene 11 in einer schematischen Darstellung.

Das Werkzeuggerät ist als Sägekopf 12 ausgebildet und umfasst ein Sägeblatt 14, das an einem Sägearm 15 befestigt ist und um eine Drehachse 16 angetrieben wird. Der Sägearm 15 ist um eine Schwenkachse 17 schwenkbar ausgebildet. Durch eine Schwenkbewegung des Sägearms 15 um die Schwenkachse 17 wird die Schnitttiefe des Sägeblattes 14 verändert. Der Schwenkwinkel des Sägearms 15 bestimmt mit dem Durchmesser des Sägeblattes 14, wie tief das Sägeblatt 14 in ein zu bearbeitendes Werkstück 18 eintaucht. Alternativ zur Schwenkbewegung des Sägearms 15 um die Schwenkachse 17 kann der Sägearm 15 beispielsweise mit Hilfe eines Linearantriebes oder einer sonstigen Antriebseinrichtung verstellt werden. Zum Schutz des Bedieners kann das Sägeblatt 14 von einem Sägeblattschutz umgeben sein, der mittels eines Blattschutzhalters am Sägearm 15 befestigt wird.

Die Drehung des Sägeblattes 14 um die Drehachse 16 erfolgt über einen Antriebsmotor **21** und die Schwenkbewegung des Sägearms 15 um die Schwenkachse 17 erfolgt über einen Schwenkmotor **22.** Der Antriebsmotor 21 und der Schwenkmotor 22 sind in einem Gerätegehäuse **23** des Sägekopfes 12 angeordnet. Die motorische Vorschubeinrichtung 13 umfasst einen Führungsschlitten **24** und einen Vorschubmotor **25,** der im Gerätegehäuse 23 angeordnet ist. Der Sägekopf 12 ist auf dem Führungsschlitten 24 befestigt und über den Vorschubmotor 25 entlang der Führungsschiene 11 in einer Vorschubrichtung **26** verschiebbar ausgebildet. Im Gerätegehäuse 23 ist neben den Motoren 21, 22, 25 eine erste Kontrolleinrichtung **27** zur Steuerung des Sägekopfes 12 und der motorischen Vorschubeinrichtung 13 angeordnet.

Die Bedienung des Gerätesystems 10 erfolgt über eine Steuerungseinrichtung **28,** die in der gezeigten Ausführung der FIG. 1 als Fernsteuerungseinrichtung ausgebildet ist. Die Fernsteuerungseinrichtung 28 umfasst ein Gerätegehäuse **29,** eine im Gerätegehäuse 29 angeordnete zweite Kontrolleinrichtung **31** sowie eine Bedienungseinrichtung **32** und eine Anzeigeeinrichtung **33,** die auf einer Oberseite **34** des Gerätegehäuses 29 angeordnet sind. Die zweite Kontrolleinrichtung 31 ist über eine Kommunikationsverbindung **35** mit der ersten Kontrolleinrichtung 27 verbunden. Die Kommunikationsverbindung 35 ist als Kabelverbindung oder als kabellose Kommunikationsverbindung, beispielsweise in Form einer Infrarot-, Bluetooth-, WLAN- oder Wi-Fi-Verbindung, ausgebildet. Neben den aufgeführten, kabellosen Verbindungstechnologien eignen sich sämtliche bereits bekannten und zukünftigen kabellosen Verbindungstechnologien zur Datenübertragung.

Zur Überwachung des Gerätesystems 10 und des Bearbeitungsprozesses weist das Gerätesystem 10 eine Sensoreinrichtung **36** mit mehreren Sensorelementen auf. Ein erstes Sensorelement **37** ist als Schwenkwinkelsensor und ein zweites Sensorelement **38** als Wegsensor ausgebildet. Der Schwenkwinkelsensor 37 misst den aktuellen Schwenkwinkel **α** des Sägearms 15. Der Schwenkwinkel des Sägearms 15 bestimmt mit dem Durchmesser des Sägeblattes 14, wie tief das Sägeblatt 14 in das Werkstück 18 eintaucht. Der Wegsensor 38 misst die aktuelle Position **X** des Sägekopfes 12 auf der Führungsschiene 11. Die Messgrößen a, X werden vom Schwenkwinkelsensor 37 und vom Wegsensor 38 an die erste Kontrolleinrichtung 27 übermittelt.

**FIG. 2** zeigt das Zusammenspiel zwischen der ersten Kontrolleinrichtung 27 des Gerätesystems 10 und der Fernsteuerungseinrichtung 28 in Form eines Blockdiagramms.

Die erste Kontrolleinrichtung 27 dient zur Steuerung des Sägekopfes 12, der motorischen Vorschubeinrichtung 13 und der Sensoreinrichtung 36. Die erste Kontrolleinrichtung 27 umfasst ein Steuerelement **51** und ein Auswerteelement **52.** Mit Hilfe des Steuerelementes 51 werden der Sägekopf 12, die motorische Vorschubeinrichtung 13 und die Sensoreinrichtung 36 gesteuert. Das Auswerteelement 52 dient dazu, die Messgrößen, die während des Bearbeitungsprozesses mit der Sensoreinrichtung 36 erfasst wurden, auszuwerten. Neben den Steuer- und Auswerteelementen 51, 52 weist die erste Kontrolleinrichtung 27 ein Speicherelement **53** auf, in dem die von der Sensoreinrichtung 36 erfassten Messgrößen gespeichert werden können.

Der Bediener stellt über die Bedienungseinrichtung 32 der Fernsteuerungseinrichtung 28 die gewünschten Geräte- und Bearbeitungsparameter ein. Die zweite Kontrolleinrichtung 31 wandelt die Geräte- und Bearbeitungsparameter in entsprechende Steuerbefehle für den Sägekopf 12 und die motorische Vorschubeinrichtung 13 um. Dabei werden unter dem Begriff "Steuerbefehl" sämtliche Befehle einer Kontrolleinrichtung zur Steuerung von Gerätekomponenten zusammengefasst. Die Steuerbefehle werden über die Kommunikationsverbindung 35 von der zweiten Kontrolleinrichtung 31 an die erste Kontrolleinrichtung 27 übermittelt. Das Steuerelement 51 der ersten Kontrolleinrichtung 27 erteilt die Steuerbefehle an den Sägekopf 12 und die motorische Vorschubeinrichtung 13.

Während der Bearbeitung werden der Sägekopf 12, die motorische Vorschubeinrichtung 13 und der Bearbeitungsprozess von der Sensoreinrichtung 36 überwacht. Die Sensorelemente 37, 38 der Sensoreinrichtung 36 erfassen verschiedene Messgrößen, wobei die Erfassung der Messgrößen kontinuierlich (analog) oder mit einer Abtastfrequenz (digital) erfolgen kann. Im Ausführungsbeispiel der FIG. 1 erfasst der Schwenkwinkelsensor 37 den Schwenkwinkel α des Sägearms 15 und der Wegsensor 38 die Position X des Sägekopfes 12. Die erfassten Messgrößen werden von den Sensorelementen 37, 38 an das Auswerteelement 52 der ersten Kontrolleinrichtung 27 übermittelt. Das Auswerteelement 52 berechnet auf Grundlage der erfassten Messgrößen α, X und weiterer Geräteparameter, wie dem Durchmesser des Sägeblattes 14, ein aktuelles Bearbeitungsergebnis des Bearbeitungsprozesses. Die Eintauchtiefe des Sägeblattes 14 in das Werkstück lässt sich beispielsweise aus dem Schwenkwinkel α des Sägearms 15 und dem Durchmesser des Sägeblattes 14 berechnen.

Das berechnete, aktuelle Bearbeitungsergebnis wird über die Kommunikationsverbindung 35 an die zweite Kontrolleinrichtung 31 übermittelt und auf der Anzeigeeinrichtung 33 der Fernsteuerungseinrichtung 28 dargestellt. Die Darstellung des aktuellen Bearbeitungsergebnisses kann als Zahlenwert und/oder in grafischer Form erfolgen. Der Bediener kann den Bearbeitungsprozess mit Hilfe der aktuellen Bearbeitungsergebnisse überwachen. Bei einem manuellen Verfahren sind vor allem die aktuelle Eintauchtiefe des Sägeblattes 14 in das Werkstück 18, die der aktuellen Schnitttiefe entspricht, und die Position der Endpunkte geeignete Größen zur Überwachung des Bearbeitungsprozesses. Sämtliche Informationen über das Bearbeitungsergebnis, die aus den Messgrößen der Sensoreinrichtung 36 berechnet werden können, können auf der Anzeigeeinrichtung 33 der Fernsteuerungseinrichtung 28 angezeigt werden.

Die erfassten Messgrößen α, X und die daraus berechneten, aktuellen Bearbeitungsergebnisse können im Speicherelement 53 der ersten Kontrolleinrichtung 27 gespeichert werden. Alternativ können die Messgrößen α, X und die aktuellen Bearbeitungsergebnisse in einem Speicherelement **54** der zweiten Kontrolleinrichtung 31 gespeichert werden. Aus den aktuellen Bearbeitungsergebnissen kann die zweite Kontrolleinrichtung 31 weitere Kenngrößen zur Überwachung des Bearbeitungsprozesses berechnen oder die zeitliche Entwicklung des Bearbeitungsprozesses grafisch darstellen. Neben der aktuellen Eintauchtiefe des Sägeblattes 14 in das Werkstück 18 ist beispielsweise der Verlauf des Trennschnittes im Werkstück 18 für den Bediener interessant.

In der Ausführung der FIG. 2 erfolgt die Berechnung des aktuellen Bearbeitungsergebnisses im Auswerteelement 52 der ersten Kontrolleinrichtung 27. Alternativ können die Messgrößen α, X der Sensoreinrichtung 36 über die Kommunikationsverbindung 35 an die zweite Kontrolleinrichtung 31 übermittelt werden und die Berechnung des aktuellen Bearbeitungsergebnisses erfolgt in der zweiten Kontrolleinrichtung 31. Die Messgrößen α, X und die daraus berechneten, aktuellen Bearbeitungsergebnisse werden im Speicherelement 54 der zweiten Kontrolleinrichtung 31 gespeichert.

Die erste Kontrolleinrichtung 27 kann über eine weitere Kommunikationsverbindung **55** mit einer weiteren Anzeigeeinrichtung **56** verbunden sein. In dieser Ausführung ist es vorteilhaft, wenn die Berechnung des aktuellen Bearbeitungsergebnisses in der ersten Kontrolleinrichtung 27 erfolgt und das berechnete Bearbeitungsergebnis anschließend von der ersten Kontrolleinrichtung 27 an die verbundenen Anzeigeeinrichtungen 33, 56 übermittelt wird. Die Zeitverzögerung zwischen der Berechnung und der Anzeige auf den Anzeigeneinrichtungen 33, 56 wird reduziert. Wenn die Berechnung des aktuellen Bearbeitungsergebnisses in der zweiten Kontrolleinrichtung 31 erfolgt, sollte die weitere Anzeigeeinrichtung 56 über eine weitere Kommunikationsverbindung **57** mit der Fernsteuerungseinrichtung 28 verbunden sein.

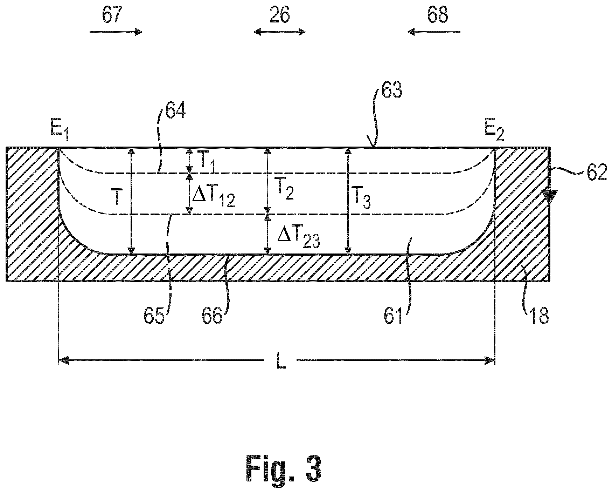

**FIG. 3** zeigt das Werkstück 18, in dem mit Hilfe des Gerätesystems 10 der FIG. 1 ein Trennschnitt **61** erzeugt wird. Der Trennschnitt 61 weist in einer Tiefenrichtung **62** eine Schnitttiefe **T** auf und verläuft in der Vorschubrichtung 26 entlang einer Trennlinie **63** zwischen einem ersten Endpunkt **E₁** und einem zweiten Endpunkt **E₂.** Der Trennschnitt 61 wird in drei Teilschnitten **64, 65, 66** erstellt. Der erste Teilschnitt 64 wird als Führungsschnitt, der zweite Teilschnitt 65 als erster Hauptschnitt und der dritte Teilschnitt 66 als zweiter Hauptschnitt bezeichnet.

Der erste Teilschnitt 64 weist eine erste Schnitttiefe **T₁** auf, die einem ersten Schwenkwinkel **α₁** des Sägearms 15 entspricht, und wird in einer Hinrichtung **67** zwischen dem ersten und zweiten Endpunkt E₁, E₂ erzeugt. Der zweite Teilschnitt 65 weist eine zweite Schnitttiefe **T₂** auf, die einem zweiten Schwenkwinkel **α₂** des Sägearms 15 entspricht, und wird in einer Rückrichtung **68** zwischen dem zweiten und ersten Endpunkt E₂, E₁ erzeugt, wobei die Rückrichtung 68 entgegen gerichtet zur Hinrichtung 67 verläuft. Der dritte Teilschnitt 66 weist eine dritte Schnitttiefe **T₃** auf, die einem dritten Schwenkwinkel **α₃** des Sägearms 15 entspricht, und wird in der Hinrichtung 67 zwischen dem ersten und zweiten Endpunkt E₁, E₂ erzeugt. Nach dem dritten Teilschnitt 65 ist der Trennschnitt 61 im Werkstück 18 fertiggestellt.

Die Schnitttiefen T₁, T₂, T₃ der Teilschnitte 64, 65, 66 können aus den Schwenkwinkeln α₁, α₂, α₃ des Sägearms 15, die der Schwenkwinkelsensor 37 erfasst, und dem Durchmesser des Sägeblattes 14 berechnen werden. Aus den Schnitttiefen T₁, T₂, T₃ können Hauptschnitttiefe durch Differenzbildung bestimmt werden, eine erste Hauptschnitttiefe **ΔT₁₂** ergibt sich als Differenz aus der ersten und zweiten Schnitttiefe T₂ - T₁ und eine zweite Hauptschnitttiefe **ΔT₂₃** ergibt sich als Differenz aus der zweiten und dritten Schnitttiefe T₃ - T₂. Die Positionen der Endpunkte E₁, E₂ können aus den Positionen des Sägekopfes 12, die der Wegsensor 38 erfasst, dem Durchmesser des Sägeblattes 14 und dem Schwenkwinkel α des Sägearms 15 berechnet werden. Die Länge L des Trennschnittes 61 ergibt sich aus dem Abstand zwischen dem ersten Endpunkt E₁ und dem zweiten Endpunkt E₂.

Alle in FIG. 3 dargestellten Informationen über den Trennschnitt 61 oder die Teilschnitte 64, 65, 66, die aus den Messgrößen der Sensoreinrichtung 36 berechnet werden, können auf der Anzeigeeinrichtung 33 der Fernsteuerungseinrichtung 28 angezeigt werden. Die Darstellung der Messgrößen der Sensoreinrichtung 36, der aktuellen Bearbeitungsergebnisse und weiterer Kenngrößen kann als Zahlenwert und/oder in grafischer Form erfolgen. Zu den aktuellen Bearbeitungsergebnissen, die aus den Messgrößen der Sensoreinrichtung 36 berechnet werden, gehört vor allem die Schnitttiefe T₁, T₂, T₃ des Sägeblattes 14. Zu den weiteren Kenngrößen gehören die Hauptschnitttiefen ΔT₁₂, ΔT₂₃, die Positionen der Endpunkte E₁, E₂ des Trennschnittes 61 und die Länge L des Trennschnittes 61.

## Patentansprüche

1. Vorrichtung (10) zum Trennen eines Werkstückes (18) entlang einer Trennlinie (63) zwischen einem ersten und zweiten Endpunkt (E₁, E₂), aufweisend:
▪ einen Sägekopf (12) mit einem Antriebsmotor (21) und einem Sägeblatt (14), das an einem, um eine Schwenkachse (17) schwenkbaren Sägearm (15) befestigt ist und vom Antriebsmotor (21) um eine Drehachse (16) drehbar ist,
▪ eine Vorschubeinrichtung (13) mit einem Führungsschlitten (24) und einem Vorschubmotor (25), wobei der Sägekopf (12) auf dem Führungsschlitten (24) angeordnet und vom Vorschubmotor (25) entlang einer Führungsschiene (11) in einer Vorschubrichtung (26) verfahrbar ist,
▪ eine Sensoreinrichtung (36) mit mindestens einem Sensorelement (37, 38) zur Überwachung des Sägekopfes (12), der Vorschubeinrichtung (13) und/oder des Bearbeitungsprozesses, wobei die Sensoreinrichtung (36) ein erstes Sensorelement (37), das als Schwenkwinkelsensor ausgebildet ist und einen Schwenkwinkel (α) des Sägearms (15) misst, und ein zweites Sensorelement (38), das als Wegsensor ausgebildet ist und eine Position (X) des Sägekopfes (12) auf der Führungsschiene (11) misst, umfasst,
▪ eine Kontrolleinrichtung (27, 31) mit einem Steuerelement (51) zur Steuerung des Sägekopfes (12), der Vorschubeinrichtung (13) und der Sensoreinrichtung (36) sowie einem Auswerteelement (52) zur Auswertung der mit der Sensoreinrichtung (36) erfassten Messgrößen (α, X), wobei die Messgrößen (α, X) den Schwenkwinkel (α) des Sägearms (15) und die Position (X) des Sägekopfes (12) umfassen,
▪ eine Bedienungseinrichtung (32) zur Bedienung des Sägekopfes (12) und der Vorschubeinrichtung (13) und
▪ eine Anzeigeeinrichtung (33),
**dadurch gekennzeichnet, dass** die Kontrolleinrichtung (27, 31) auf Grundlage der, von der Sensoreinrichtung (36) erfassten Messgrößen (α, X) ein aktuelles Bearbeitungsergebnis (T₁, T₂, T₃) des Bearbeitungsprozesses berechnet und das berechnete, aktuelle Bearbeitungsergebnis (T₁, T₂, T₃) auf der Anzeigeeinrichtung (33) dargestellt.

2. Vorrichtung nach Anspruch 1, **dadurch gekennzeichnet, dass** die Kontrolleinrichtung (27, 31) ein Speicherelement (53, 54) aufweist und die von der Sensoreinrichtung (36) erfassten Messgrößen (α, X) und das aktuelle Bearbeitungsergebnis (T₁, T₂, T₃) im Speicherelement (53, 54) speichert.

3. Vorrichtung nach Anspruch 2, **dadurch gekennzeichnet, dass** die Kontrolleinrichtung (27, 31) aus den im Speicherelement (53, 54) gespeicherten Messgrößen (α, X) und aktuellen Bearbeitungsergebnissen (T₁, T₂, T₃) weitere Kenngrößen (ΔT₁₂, ΔT₂₃, E₁, E₂, L) für den Bearbeitungsprozess berechnet und auf der Anzeigeeinrichtung (33) dargestellt.

4. Vorrichtung nach einem der Ansprüche 1 bis 3, **gekennzeichnet durch** eine Fernsteuerungseinrichtung (28), die die Bedienungseinrichtung (32) und die Anzeigeeinrichtung (33) umfasst und über eine Kommunikationsverbindung (35) mit der Kontrolleinrichtung (27, 31) verbunden ist.

5. Vorrichtung nach Anspruch 4, **dadurch gekennzeichnet, dass** die Kontrolleinrichtung (27, 31) eine erste Kontrolleinrichtung (27) und eine zweite Kontrolleinrichtung (31) aufweist, wobei die erste Kontrolleinrichtung (27) im Sägekopf (12) und die zweite Kontrolleinrichtung (31) in der Fernsteuerungseinrichtung (28) angeordnet sind.

6. Vorrichtung nach Anspruch 5, **dadurch gekennzeichnet, dass** die Berechnung des aktuellen Bearbeitungsergebnisses (T₁, T₂, T₃) in der ersten Kontrolleinrichtung (27) erfolgt.

7. Vorrichtung nach Anspruch 5, **dadurch gekennzeichnet, dass** die erste Kontrolleinrichtung (27) die von der Sensoreinrichtung (36) erfassten Messgrößen (α, X) an die zweite Kontrolleinrichtung (31) übermittelt und die Berechnung des aktuellen Bearbeitungsergebnisses (T₁, T₂, T₃) in der zweiten Kontrolleinrichtung (31) erfolgt.

## Claims

1. Device (10) for separating a workpiece (18) along a separating line (63) between a first and second end point (E₁, E₂), having:
▪ a saw head (12) with a drive motor (21) and a saw blade (14), which is fastened to a saw arm (15) that may swivel around a swivel axis (17) and may be turned around an axis of rotation (16) by the drive motor (21),
▪ a feeding device (13) with a guide carriage (24) and a feed motor (25), in which the saw head (12) is arranged on the guide carriage (24) and may be driven along a guide rail (11) in a feed direction (26) by the feed motor (25),
▪ a sensor device (36) with at least one sensor element (37, 38) for monitoring the saw head (12), the feeding device (13) and/or the processing process, in which the sensor device (36) comprises a first sensor element (37), which is made as a swivel angle sensor and measures a swivel angle (a) of the saw arm (15), and a second sensor element (38), which is made as a position sensor and measures a position (X) of the saw head (12) on the guide rail (11),
▪ a control device (27, 31) with a control element (51) for controlling the saw head (12), the feeding device (13) and the sensor device (36) as well as an evaluation element (52) for evaluating the measured variables (α, X) detected with the sensor device (36), in which the measured variables (α, X) comprise the swivel angle (α) of the saw arm (15) and the position (X) of the saw head (12),
▪ an operating device (32) for operating the saw head (12) and the feeding device (13) and
▪ a display device (33),
**characterised in that** on the basis of the measured variables (α, X) detected by the sensor device (36) the control device (27, 31) calculates a current processing result (T₁, T₂, T₃) of the processing process and illustrates the calculated, current processing result (T₁, T₂, T₃) on the display device (33).

2. Device according to claim 1, **characterised in that** the control device (27, 31) has a storage element (53, 54) and stores the measured variables (α, X) detected by the sensor device (36) and the current processing result (T₁, T₂, T₃) in the storage element (53, 54).

3. Device according to claim 2, **characterised in that** the control device (27, 31) calculates further measured variables (ΔT₁₂, ΔT₂₃, E₁, E2, L) for the processing process from the measured variables (α, X) and current processing results (T₁, T₂, T₃) stored in the storage element (53, 54) and illustrates them on the display device (33).

4. Device according to one of claims 1 to 3, **characterised by** a remote control device (28), which comprises the operating device (32) and the display device (33) and is connected to the control device (27, 31) through a communication connection (35).

5. Device according to claim 4, **characterised in that** the control device (27, 31) has a first control device (27) and a second control device (31), in which the first control device (27) is arranged in the saw head (12) and the second control device (31) is arranged in the remote control device (28).

6. Device according to claim 5, **characterised in that** the calculation of the current processing result (T₁, T₂, T₃) is carried out in the first control device (27).

7. Device according to claim 5, **characterised in that** the first control device (27) transmits the measured variables (α, X) detected by the sensor device (36) to the second control device (31) and the calculation of the current processing result (T₁, T₂, T₃) is carried out in the second control device (31).

## Revendications

1. Dispositif (10) pour découper une pièce (18) le long d'une ligne de coupe (63) entre un premier point d'extrémité et un second point d'extrémité (E₁, E₂), comportant :
▪ une tête de scie (12) avec un moteur d'entraînement (21) et une lame de scie (14) qui est fixée sur un bras de scie (15) pouvant pivoter autour d'un axe de pivotement (17) et qui peut être entraînée en rotation par le moteur d'entraînement (21) autour d'un axe de rotation (16),
▪ un dispositif d'avance (13) avec un chariot de guidage (24) et un moteur d'avance (25), dans lequel la tête de scie (12) est agencée sur le chariot de guidage (24) et peut être déplacée par le moteur d'avance (25) le long d'un rail de guidage (11) dans une direction d'avance (26),
▪ un dispositif de capteur (36) avec au moins un élément de capteur (37, 38) pour surveiller la tête de scie (12), le dispositif d'avance (13) et/ou le processus d'usinage, dans lequel le dispositif de capteur (36) comprend un premier élément de capteur (37) qui est configuré comme un capteur d'angle de pivotement et mesure un angle de pivotement (a) du bras de scie (15), et un second élément de capteur (38) qui est configuré comme un capteur de déplacement et mesure une position (X) de la tête de scie (12) sur le rail de guidage (11),
▪ un dispositif de contrôle (27, 31) avec un élément de commande (51) pour commander la tête de scie (12), le dispositif d'avance (13) et le dispositif de capteur (36) ainsi qu'un élément d'évaluation (52) pour évaluer les grandeurs de mesure (α, X) acquises avec le dispositif de capteur (36), dans lequel les grandeurs de mesure (α, X) comprennent l'angle de pivotement (α) du bras de scie (15) et la position (X) de la tête de scie (12),
▪ un dispositif de commande (32) pour commander la tête de scie (12) et le dispositif d'avance (13) et
▪ un dispositif d'affichage (33),
**caractérisé en ce que** le dispositif de contrôle (27, 31) calcule, sur la base des grandeurs de mesure (α, X) acquises par le dispositif de capteur (36), un résultat d'usinage actuel (T₁, T₂, T₃) du processus d'usinage et qui affiche sur le dispositif d'affichage (33) le résultat d'usinage actuel (T₁, T₂, T₃) calculé.

2. Dispositif selon la revendication 1, **caractérisé en ce que** le dispositif de contrôle (27, 31) comporte un élément de mémoire (53, 54) et mémorise les grandeurs de mesure (α, X) acquises par le dispositif de capteur (36) et le résultat d'usinage actuel (T₁, T₂, T₃) dans l'élément de mémoire (53, 54).

3. Dispositif selon la revendication 2, **caractérisé en ce que** le dispositif de contrôle (27, 31) calcule à partir des grandeurs de mesure (α, X) mémorisées dans l'élément de mémoire (53, 54) et des résultats d'usinage actuels (T₁, T₂, T₃) des grandeurs caractéristiques supplémentaires (ΔT₁₂, ΔT₂₃, E₁, E₂, L) pour le procédé d'usinage et les affiche sur le dispositif d'affichage (33).

4. Dispositif selon l'une des revendications 1 à 3, **caractérisé par** un dispositif de télécommande (28) qui comprend le dispositif de commande (32) et le dispositif d'affichage (33) et est relié au dispositif de contrôle (27, 31) par une liaison de communication (35).

5. Dispositif selon la revendication 4, **caractérisé en ce que** le dispositif de contrôle (27, 31) comporte un premier dispositif de contrôle (27) et un second dispositif de contrôle (31), dans lequel le premier dispositif de contrôle (27) est agencé dans la tête de scie (12) et le second dispositif de contrôle (31) est agencé dans le dispositif de télécommande (28).

6. Dispositif selon la revendication 5, **caractérisé en ce que** le calcul du résultat d'usinage (T₁, T₂, T₃) actuel s'effectue dans le premier dispositif de contrôle (27).

7. Dispositif selon la revendication 5, **caractérisé en ce que** le premier dispositif de contrôle (27) transmet au second dispositif de contrôle (31) les grandeurs de mesure (α, X) acquises par le dispositif de capteur (36) et le calcul du résultat d'usinage actuel (T₁, T₂, T₃) s'effectue dans le second dispositif de contrôle (31) .
